# EUROPÄISCHE PATENTSCHRIFT

(11) **EP 0 902 620 B1**
(45) Veröffentlichungstag und Bekanntmachung des Hinweises auf die Patenterteilung: **26.09.2001**
(21) Anmeldenummer: 97921697.5
(22) Anmeldetag: 22.04.1997
(51) Int. Cl.: A01N 37/24

(54) **MITTEL UND VERFAHREN ZUR BEKÄMPFUNG VON SCHADPILZEN**
PROCESS AND AGENTS FOR CONTROLLING HARMFUL FUNGI
PRODUITS ET PROCEDE POUR LA DESTRUCTION DE CHAMPIGNONS

(30) Priorität: 22.04.1996 DE 19615977
(43) Veröffentlichungstag der Anmeldung: 24.03.1999
(73) Patentinhaber: BASF AKTIENGESELLSCHAFT, 67056 Ludwigshafen (DE)
(72) Erfinder: WAGNER, Oliver, D-67061 Ludwigshafen (DE); EICKEN, Karl, D-67157 Wachenheim (DE); AMMERMANN, Eberhard, D-64646 Heppenheim (DE); LORENZ, Gisela, D-67434 Hambach (DE); STRATHMANN, Siegfried, D-67117 Limburgerhof (DE); KÖHLE, Harald, D-67273 Bobenheim (DE); RETZLAFF, Günter, D-67354 Römerberg (DE)
(74) Vertreter: Kinzebach, Werner, Dr.
(86) Internationale Anmeldenummer: EP9702036
(87) Internationale Veröffentlichungsnummer: WO9739628

(56) Entgegenhaltungen:
- EP-A- 0 256 503
- EP-A- 0 339 418
- EP-A- 0 545 099
- WO-A-96/03047
- DE-A- 4 313 867
- DE-A- 4 437 048
- DE-A- 19 504 599

## Beschreibung

Die vorliegende Erfindung betrifft Mittel zur Bekämpfung von Schadpilzen sowie Verfahren zur Bekämpfung von Schadpilzen unter Anwendung derartiger Mittel.

Es ist bekannt, daß p-Hydroxyanilinderivate der Formel I 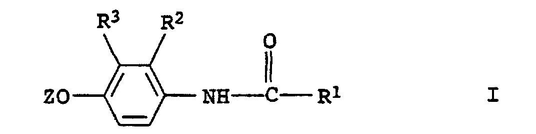 als Wirkstoffe in fungiziden Mitteln eingesetzt werden. So sind Verbindungen der Formel I aus EP-A 0 339 481, EP-A 0653 417, EP-A 0 653 418 und den deutschen Patentanmeldungen 195 04 599.8 und 195 40 970.1 bekannt.

Die DE-A 44 37 048 beschreibt fungizide Mittel, die eine Wirkstoffkombination aus p-Hydroxyanilinderivaten der Formel I, worin R¹ für in 1-Stellung durch Methyl substituiertes Cyclohexyl, R² und R³ für Chlor und Z für Wasserstoff steht, und weiteren fungiziden Wirkstoffen, beispielsweise Oxycarboxin, enthalten.

Die EP-A-545 099 beschreibt Anilidverbindungen der Formel 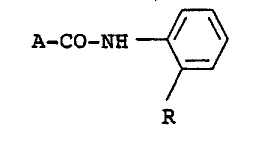 worin A für Phenyl, das in 2-Stellung durch Methyl, Trifluormethyl, Chlor, Brom oder Jod substituiert ist oder für bestimmte aromatische oder nicht-aromatische heterocyclische Reste, die gegebenenfalls durch Methyl, Chlor oder Trifluormethyl substituiert sein können, steht und R für bestimmte aliphatische oder cycloaliphatische Reste, die gegebenenfalls durch Halogen substituiert sein können, oder für Phenyl, das gegebenenfalls durch C₁-C₄-Alkyl, C₁-C₄-Alkoxy, C₁-C₄-Alkylthio oder Halogen substituiert ist, steht. Diese Verbindungen sind zur Bekämpfung von Botrytis brauchbar.

Die EP-A-589 301 beschreibt Anilidverbindungen der gleichen Formel, worin A einen cyclischen Rest der Formeln bedeutet: 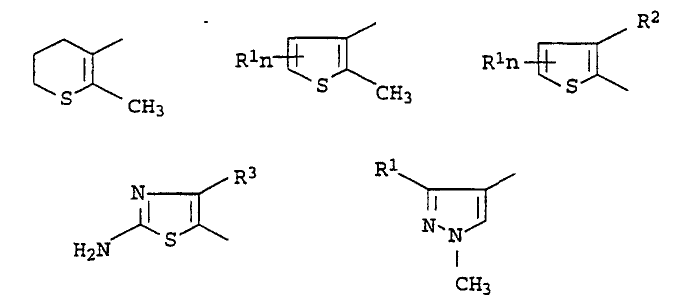 worin R¹ für Wasserstoff oder C₁-C₄-Alkyl steht; R² für Halogen oder C₁-C₄-Alkyl steht; R³ für C₁-C₄-Alkyl oder C₁-C₄-Halogenalkyl steht; n für 1 oder 2 steht; und R im wesentlichen die oben angegebenen Bedeutungen besitzt. Diese Verbindungen sind ebenfalls zur Behandlung von Botrytis brauchbar.

Die WO 93/11117 beschreibt Verbindungen der Formel 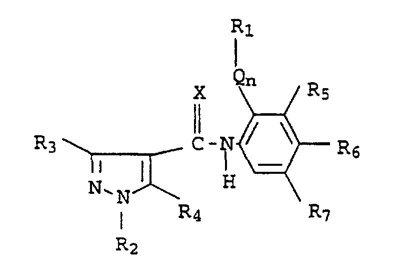 worin
- Q: für C₁-C₃-Alkyl, C₂-C₃-Alkenyl, C₂-C₃-Alkinyl, -(CH₂)ₘCH= oder -(CH₂)ₘ-X-(CH₂)ₘ- steht;
- n: für 0 oder 1 steht;
jedes m unabhängig voneinander für 0, 1, 2 oder 3 steht;
jedes X unabhängig für O oder S steht;
- R¹: für bestimmte alicyclische Reste steht;
- R²: für Wasserstoff, fluoriertes Methyl, Methyl, Ethyl, C₂-C₆-Alkenyl, C₃-C₆-Chloralkyl, Phenyl, Alkylthioalkyl, Alkoxyalkyl, Halogenalkylthioalkyl, Halogenalkoxyalkyl oder Hydroxyalkyl steht;
- R³: für Halogenmethyl, Halogenmethoxy, Methyl, Ethyl, Halogen, Cyano, Methylthio, Nitro, Aminocarbonyl oder Aminocarbonylmethyl sthet;
- R⁴: für Wasserstoff, Halogen oder Methyl steht;
R⁵, R⁶ und R⁷ jeweils unabhängig voneinander ausgewählt sind unter Wasserstoff, Halogen, Cyano, C₁-C₆-Alkyl, C₂-C₆-Alkenyl, C₂-C₆-Alkinyl, C₁-C₄-Alkoxy, C₁-C₄-Alkylthio, C₃-C₄-Cycloalkyl und Halogenmethoxy. Diese Verbindungen sind fungizid wirksam, besitzen aber alleine kein ausreichend breites und befriedigendes Wirkungsspektrum.

Bei der alleinigen Anwendung dieser Wirkstoffe hat sich jedoch gezeigt, daß ihre Wirkung nur vorübergehend ist, d.h. bereits nach einiger Zeit war erneutes Wachstum der Pilze zu beobachten.

Der vorliegenden Erfindung liegt die Aufgabe zugrunde, die Wirkung der erwähnten Verbindungen bei der Bekämpfung von Schadpilzen zu verbessern.

Überraschenderweise wurde nun gefunden, daß diese Aufgabe gelöst wird, wenn man Verbindungen des angegebenen Typs in Kombination verwendet.

Gegenstand der Erfindung sind daher Mittel zur Bekämpfung von Schadpilzen, die in einem festen oder flüssigen Träger enthalten:
a) mindestens ein p-Hydroxyanilinderivat der Formel I 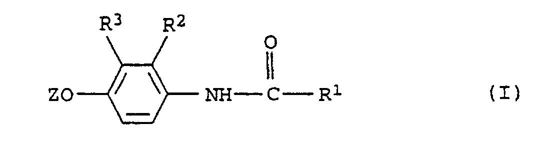 worin
   - R¹: für Wasserstoff, Alkyl, welches partiell oder vollständig halogeniert sein und/oder eine oder zwei der folgenden Gruppen tragen kann: Alkoxy, Halogenalkoxy, Alkylthio, Cycloalkyl, Cycloalkenyl, wobei die cyclischen Gruppen ihrerseits ein, zwei oder drei Halogenatome, Alkylgruppen und/oder Alkoxygruppen tragen können und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio;
   Cycloalkyl oder Cycloalkenyl, wobei diese Reste partiell oder vollständig halogeniert sein und/oder 1, 2, 3, 4 oder 5 der folgenden Gruppen tragen können: Alkyl, Halogenalkyl, Alkoxy, Halogenalkoxy und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio;
   C₆-C₁₅-Bicycloalkyl oder C₇-C₁₅-Bicycloalkenyl, wobei diese Reste partiell oder vollständig halogeniert sein und/oder 1, 2, 3, 4 oder 5 der folgenden Gruppen tragen können: Alkyl, Halogenalkyl, Alkoxy, Halogenalkoxy und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio; steht;
   - R² und R³: unabhängig voneinander für Halogen, Alkyl, Halogenalkyl, Alkoxy oder Halogenalkoxy stehen;
   - Z: für H oder R⁴-(CO)- steht, worin
   - R⁴: für die folgenden Reste steht:
   Alkyl oder Alkenyl, wobei diese Gruppen partiell oder vollständig halogeniert sein und/oder einen der folgenden Reste tragen können: Alkoxy, Halogenalkoxy, Alkylthio, Cycloalkyl, Cycloalkenyl oder Aryl, wobei die aromatischen Reste ihrerseits eine, zwei oder drei der folgenden Gruppen tragen können: Nitro, Cyano, Halogen, Alkyl, Halogenalkyl, Alkoxy, Halogenalkoxy und Alkylthio;
   Cycloalkyl oder Cycloalkenyl, wobei diese Gruppen einen, zwei oder drei der folgenden Reste tragen können: Halogen, Alkyl, Halogenalkyl und Alkoxy;
   Aryl, welches partiell oder vollständig halogeniert sein und/ oder einen, zwei oder drei der folgenden Reste tragen kann: Nitro, Cyano, Alkyl, Halogenalkyl, Alkoxy, Halogenalkoxy und Alkylthio;
   - OR⁵: oder NR⁶R⁷, worin
   - R⁵: für Alkyl oder Alkenyl steht, wobei diese Gruppen partiell oder vollständig halogeniert sein und/oder einen der folgenden Reste tragen können: Alkoxy, Halogenalkoxy, Alkylthio, Cycloalkyl, Cycloalkenyl oder Aryl, wobei die aromatischen Reste ihrerseits einen, zwei oder drei der folgenden Gruppen tragen können: Nitro, Cyano, Halogen, Alkyl, Halogenalkyl, Alkoxy, Halogenalkoxy und Alkylthio;
   oder für Cycloalkyl oder Cycloalkenyl steht, wobei diese Gruppen einen, zwei oder drei der folgenden Reste tragen können: Halogen, Alkyl, Halogenalkyl und Alkoxy;
   oder für Aryl steht, welches partiell oder vollständig halogeniert sein und/oder einen, zwei oder drei der folgenden Reste tragen kann: Nitro, Cyano, Alkyl, Halogenalkyl, Alkoxy, Halogenalkoxy und Alkylthio;
   - R⁶: für Alkyl oder Alkenyl, wobei diese Gruppen partiell oder vollständig halogeniert sein und/oder einen der folgenden Reste tragen können: Alkylthio, Cycloalkyl, Cycloalkenyl oder Aryl, wobei die aromatischen Reste ihrerseits eine, zwei oder drei der folgenden Gruppen tragen können: Nitro, Cyano, Halogen, Alkyl, Halogenalkyl, Alkoxy, Halogenalkoxy und Alkylthio;
   Cycloalkyl oder Cycloalkenyl, wobei diese Gruppen einen, zwei oder drei der folgenden Reste tragen können: Halogen, Alkyl, Halogenalkyl und Alkoxy;
   Aryl, welches partiell oder vollständig halogeniert sein und/ oder einen, zwei oder drei der folgenden Reste tragen kann: Nitro, Cyano, Alkyl, Halogenalkyl, Alkoxy, Halogenalkoxy und Alkylthio;
   steht; und
   - R⁷: für Wasserstoff oder Alkyl steht,
   und
b) mindestens eine Amidverbindung der Formel II

   A - CO - NR⁸ - R⁹ (II)

   worin
   - A: für eine Arylgruppe oder einen aromatischen oder nicht-aromatischen, 5- oder 6-gliedrigen Heterocyclus, der 1 bis 3 Heteroatome aufweist, die ausgewählt sind unter O, N und S, steht; wobei die Arylgruppe oder der Heterocyclus gegebenenfalls 1, 2 oder 3 Substituenten aufweisen kann, die unabhängig voneinander ausgewählt sind unter Alkyl, Halogen, CHF₂, CF₃, Alkoxy, Halogenalkoxy, Alkylthio, Alkylsulfinyl und Alkylsulfonyl;
   - R⁸: für ein Wasserstoffatom, Alkyl oder Alkoxy steht;
   - R⁹: für eine Phenyl- oder Cycloalkylgruppe steht, die gegebenenfalls 1, 2 oder 3 Substituenten aufweist, die unabhängig voneinander ausgewählt sind unter Phenyl, Alkenyl, Alkinyl, Alkenyloxy, Alkinyloxy, Cycloalkyl, Cycloalkenyl, Cycloalkyloxy und Cycloalkenyloxy, und die zusätzlich durch 1 oder mehrere Halogenatome substituiert sein kann, wobei die aliphatischen und cycloaliphatischen Reste partiell oder vollständig halogeniert sein können und/oder die cycloaliphatischen Reste durch 1, 2 oder 3 Alkylgruppen substituiert sein können und wobei die Phenylgruppe ihrerseits 1 bis 5 Halogenatome und/ oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe gegebenenfalls mit einem gesättigten 5-gliedrigen Ring kondensiert ist, der gegebenenfalls durch 1 oder mehrere Alkylgruppen substituiert ist und/ oder ein Heteroatom, ausgewählt unter O und S, aufweisen kann.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte C₁-C₁₂-Alkyl-, insbesondere C₁-C₈-Alkyl-, bevorzugter C₁-C₆-Alkyl- und besonders bevorzugt C₁-C₄- oder C₁-C₃-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1, 2 oder 3 Halogenatome vorhanden, wobei die Difluormethan/- oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio, Halogenalkylthio, Alkylsulfinyl und Alkylsulfonyl etc.

Die Alkenylgruppe umfaßt geradkettige und verzweigte Alkenylgruppen. Vorzugsweise handelt es sich dabei um geradkettige oder verzweigte C₂-C₁₂-Alkenylgruppen und insbesondere C₂-C₆-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Di-methyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1, 2 oder 3 Halogenatome auf.

Die Alkinylgruppe umfaßt geradkettige und verzweigte Alkinylgruppen. Vorzugsweise handelt es sich dabei um geradkettige und verzweigte C₂-C₁₂-Alkinylgruppen und insbesondere C₂-C₆-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine C₃-C₇-Cycloalkylgruppe, wie Cyclopropyl, Cyclobutyl, Cyclopentyl oder Cyclohexyl. Wenn die Cycloalkylgruppe substituiert ist, weist sie vorzugsweise 1, 2 oder 3 C₁-C₄-Alkylreste als Substituenten auf.

Cycloalkenyl steht vorzugsweise für eine C₄-C₇-Cycloalkenylgruppe, wie Cyclobutenyl, Cyclopentenyl oder Cyclohexenyl. Wenn die Cycloalkenylgruppe substituiert ist, weist sie vorzugweise 1, 2 oder 3 C₁-C₄-Alkylreste als Substituenten auf.

Bei einer Cycloalkoxygruppe handelt es sich vorzugsweise um eine C₅-C₆-Cycloalkoxygruppe, wie Cyclopentyloxy oder Cyclohexyloxy. Wenn die Cycloalkoxygruppe substituiert ist, weist sie vorzugsweise 1, 2 oder 3 C₁-C₄-Alkylreste als Substituenten auf.

Bei der Cycloalkenyloxygruppe handelt es sich vorzugsweise um eine C₅-C₆-Cycloalkenyloxygruppe, wie Cyclopentenyloxy oder Cyclohexenyloxy. Wenn die Cycloalkenyloxygruppe substituiert ist, weist sie vorzugsweise 1, 2 oder 3 C₁-C₄-Alkylreste als Substituenten auf.

Bicycloalkyl steht vorzugsweise für Decalinyl, Indanyl, Hydrindanyl, Bornyl, Pinanyl, Caranyl, Norbornyl und Bicyclo[2.2.2]octanyl.

Bicycloalkenyl kann eine oder zwei Doppelbindungen aufweisen und steht vorzugsweise für Indenyl, Pinenyl, Norbornenyl und Norbornadienyl.

Aryl steht vorzugsweise für Phenyl.

Hetaryl steht vorzugsweise für einen 5- oder 6-gliedrigen aromatischen Heterocyclus, der 1, 2 oder 3 Heteroatome aufweist, die unabhängig voneinander ausgewählt sind unter N, O und S. Insbesondere handelt es sich dabei um Pyridinyl, Pyrimidinyl, Thiazolyl, Pyrazolyl, Oxazolyl, Isoxazol, Isothiazolyl, Imidazolyl, Pyrrolyl, Furanyl, Thienyl oder Triazolyl.

Heterocyclyl steht vorzugsweise für einen 5- oder 6-gliedrigen, gesättigten oder ungesättigten Heterocyclus, der 1, 2 oder 3 Heteroatome aufweist, die unabhängig voneinander ausgewählt sind unter N, O und S. Insbesondere handelt es sich dabei um die Dihydro-, Tetrahydro- und Hexahydroderivate der unter "Hetaryl" genannten Reste. Bevorzugt sind Pyrrolidinyl, Tetrahydrofuranyl, Imidazolidinyl, Pyrazolidinyl, Oxazolidinyl, Isoxazolidinyl, Thiazolidinyl, Isothiazolidinyl, Piperidinyl oder Morpholinyl.

Wenn A in der Formel II für eine Phenylgruppe steht, so kann diese einen, zwei oder drei der oben erwähnten Substituenten in beliebiger Position aufweisen. Vorzugsweise sind diese Substituenten unabhängig voneinander ausgewählt unter Alkyl, Difluormethyl, Trifluormethyl und Halogen, insbesondere Chlor, Brom und Jod. Besonders bevorzugt weist die Phenylgruppe einen Substituenten in 2-Position auf.

Wenn A für einen 5-gliedrigen Heterocyclus steht, handelt es sich insbesondere um einen Furyl-, Thiazolyl-, Pyrazolyl-, Imidazolyl-, Oxazolyl-, Thienyl-, Triazolyl- oder Thiadiazolylrest oder um die entsprechenden Dihydro- oder Tetrahydroderivate davon. Ein Thiazolyl- oder Pyrazolylrest ist bevorzugt.

Wenn A für einen 6-gliedrigen Heterocyclus steht, handelt es sich dabei insbesondere um einen Pyridylrest oder einen Rest der Formel: 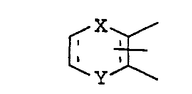 worin einer der Reste X und Y für O, S oder NR²⁰ steht, wobei R²⁰ für H oder Alkyl steht und der andere der Reste X und Y für CH₂, S, SO, SO₂ oder NR²⁰ steht. Die gestrichelte Linie bedeutet, daß gegebenenfalls eine Doppelbindung vorhanden sein kann.

Besonders bevorzugt handelt es sich bei dem 6-gliedrigen aromatischen Heterocyclus um einen Pyridylrest, insbesondere einen 3-Pyridylrest, oder um einen Rest der Formel 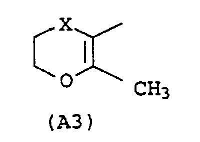 worin X für CH₂, S, SO oder SO₂ steht.

Die erwähnten heterocyclischen Reste können gegebenenfalls 1, 2 oder 3 der oben genannten Substituenten aufweisen, wobei diese Substituenten vorzugsweise unabhängig voneinander ausgewählt sind unter Alkyl, Halogen, Difluormethyl oder Trifluormethyl.

Besonders bevorzugt steht A für einen Rest der Formeln: 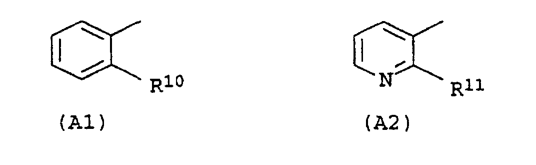 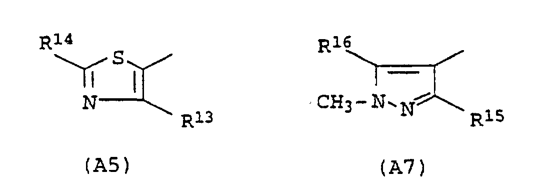 worin R¹⁰, R¹¹, R¹³, R¹⁴, R¹⁵ und R¹⁶ unabhängig voneinander für Wasserstoff, Alkyl, insbesondere Methyl, Halogen, insbesondere Chlor, CHF₂ oder CF₃ stehen.

Der Rest R⁸ in der Formel II steht vorzugsweise für ein Wasserstoffatom.

Der Rest R⁹ in der Formel II steht vorzugsweise für einen Phenylrest. Vorzugsweise weist R⁹ mindestens einen Substituenten auf, der insbesondere bevorzugt in 2-Stellung vorhanden ist. Vorzugsweise ist der Substituent (oder sind die Substituenten) ausgewählt unter Alkyl, Cycloalkyl, Cycloalkenyl, Halogen oder Phenyl.

Die Substituenten des Restes R⁹ können ihrerseits wieder substituiert sein. Die aliphatischen oder cycloaliphatischen Substituenten können dabei partiell oder vollständig halogeniert, insbesondere fluoriert oder chloriert, sein. Vorzugsweise weisen sie 1, 2 oder 3 Fluor- oder Chloratome auf. Wenn der Substituent des Restes R⁹ eine Phenylgruppe ist, so kann diese vorzugsweise mit 1 bis 3 Halogenatomen, insbesondere Chloratomen, und/oder mit einem Rest substituiert sein, der vorzugsweise ausgewählt ist unter Alkyl und Alkoxy. Besonders bevorzugt ist die Phenylgruppe mit einem Halogenatom in p-Position substituiert, d.h. der besonders bevorzugte Substituent des Restes R⁹ ist ein p-halogensubstituierter Phenylrest. Der Rest R⁹ kann auch mit einem gesättigten 5-gliedrigen Ring kondensiert sein, wobei dieser Ring seinerseits 1 bis 3 Alkylsubstituenten aufweisen kann. R⁹ steht dann beispielsweise für Indanyl, Thiaindanyl und Oxaindanyl. Bevorzugt sind Indanyl und 2-Oxaindanyl, die insbesondere über die 4-Stellung an das Stickstoffatom gebunden sind.

Gemäß einer bevorzugten Ausführungsform enthält das erfindungsgemäße Mittel als p-Hydroxyanilinderivat eine Verbindung der Formel I, worin Z für Wasserstoff steht.

Gemäß einer weiteren bevorzugten Ausführungsform enthält das erfindungsgemäße Mittel eine Verbindung der Formel I, worin
- Z: für Wasserstoff steht;
- R¹: für Alkyl, welches partiell oder vollständig halogeniert sein und/oder eine oder zwei der folgenden tragen kann: Alkoxy, Halogenalkoxy, Cycloalkyl, Cycloalkenyl, wobei die cyclischen Gruppen ihrerseits ein, zwei oder drei Halogenatome und/oder Alkylgruppen tragen können und Aryl, welches partiell oder vollständig halogeniert sein und/oder einen, zwei oder drei der folgenden Substituenten tragen kann: Alkyl und Halogenalkyl;
Cycloalkyl oder Cycloalkenyl, wobei diese Reste partiell oder vollständig halogeniert sein und/oder 1, 2, 3, 4 oder 5 der folgenden Gruppen tragen können: Alkyl, Halogenalkyl und Aryl, welches partiell oder vollständig halogeniert sein und/ oder einen, zwei oder drei der folgenden Substituenten tragen kann: Alkyl und Halogenalkyl;
C₆-C₁₅-Bicycloalkyl oder C₇-C₁₅-Bicycloalkenyl, wobei diese Reste partiell oder vollständig halogeniert sein und/oder 1, 2, 3, 4 oder 5 Alkyl- oder Halogenalkylgruppen tragen können, steht;
- R² und R³: unabhängig voneinander für Halogen, Alkyl und Halogenalkyl stehen.

Gemäß einer besonders bevorzugten Ausführungsform enthält das erfindungsgemäße Mittel eine Verbindung der Formel I, worin
- Z: für Wasserstoff steht;
- R¹: für Alkyl, welches partiell oder vollständig halogeniert sein und/oder Aryl tragen kann, welches seinerseits partiell oder vollständig halogeniert sein und/oder Alkyl tragen kann, steht;
Cycloalkyl oder Cycloalkenyl, wobei diese Reste partiell oder vollständig halogeniert sein und 1, 2, 3, 4 oder 5 Alkylgruppen tragen können;
Bicyclcoalkyl oder Bicycloalkenyl, wobei diese Reste partiell oder vollständig halogeniert sein und/oder 1, 2, 3, 4 oder 5 Alkylgruppen tragen können, steht;
- R² und R³: unabhängig voneinander für Halogen, insbesondere Fluor oder Chlor oder Alkyl stehen.

Gemäß einer insbesonders bevorzugten Ausführungsform enthält das erfindungsgemäße Mittel als p-Hydroxyanilinderivat eine Verbindung der Formel I gemäß Tabelle I.1.

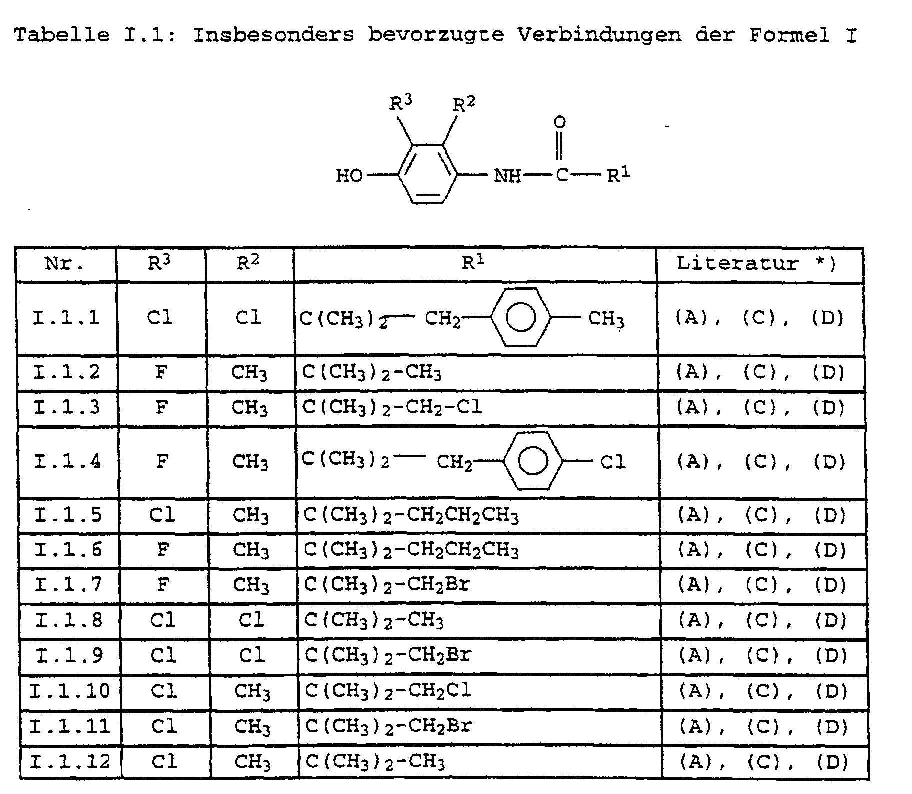

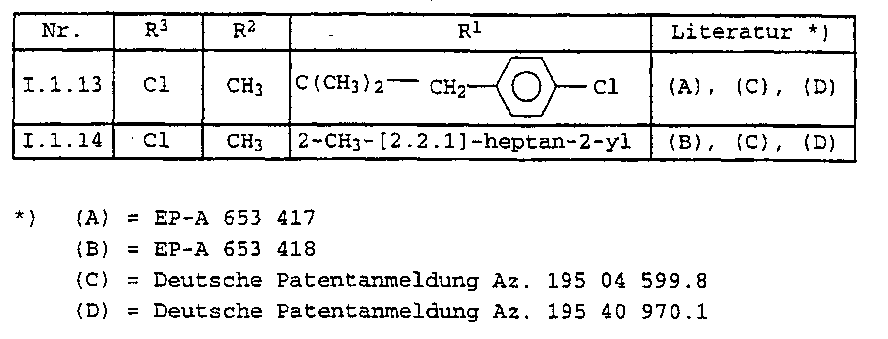

Gemäß einer speziellen Ausführungsform enthält das erfindungsgemäße Mittel eine Verbindung der Formel I gemäß Tabelle I.2.

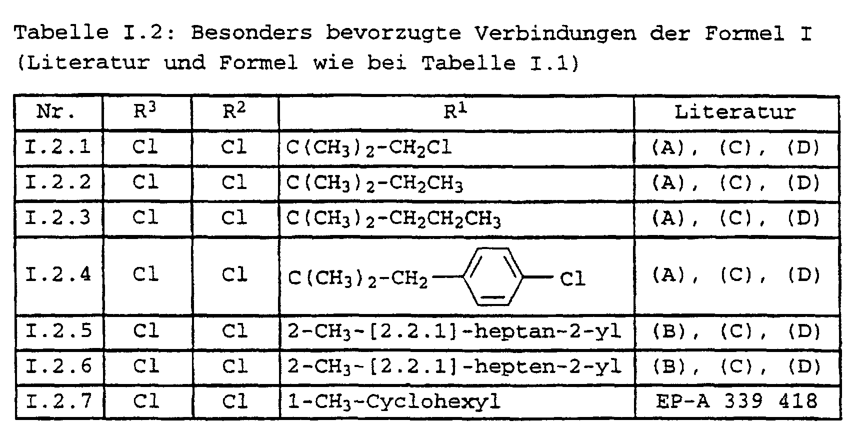

Gemäß einer weiteren bevorzugten Ausführungsform enthält das erfindungsgemäße Mittel als Amidverbindung eine Verbindung der Formel II, worin A die folgenden Bedeutungen besitzt: Phenyl, Pyridyl, Dihydropyranyl, Dihydrooxathiinyl, Dihydrooxathiinyloxid, Dihydrooxathiinyldioxid, Furyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

Gemäß einer weiteren bevorzugten Ausführungsform steht A für:
Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;
Phenyl, das gegebenenfalls in 2-Stellung durch Methyl, Trifluormethyl, Chlor, Brom oder Iod substituiert ist;
2-Methyl-5,6-dihydropyran-3-yl;
2-Methyl-5,6-dihydro-1,4-oxathiin-3-yl oder das 4-Oxid oder 4,4-Dioxid davon;
2-Methyl-furan-3-yl, das gegebenenfalls in 4- und/oder 5-Stellung durch Methyl substituiert ist;
Thiazol-5-yl, das gegebenenfalls in 2- und/oder 4-Stellung durch Methyl, Chlor, Difluormethyl oder Trifluormethyl substituiert ist;
Thiazol-4-yl, das gegebenenfalls in 2- und/oder 5-Stellung durch Methyl, Chlor, Difluormethyl oder Trifluormethyl substituiert ist;
1-Methylpyrazol-4-yl, das gegebenenfalls in 3- und/oder 5-Stellung durch Methyl, Chlor, Difluormethyl oder Trifluormethyl substituiert ist; oder
Oxazol-5-yl, das gegebenenfalls in 2- und/oder 4-Stellung durch Methyl oder Chlor substituiert ist.

Gemäß einer weiteren bevorzugten Ausführungsform enthalten die erfindungsgemäßen Mittel als Amidverbindung eine Verbindung der Formel II, worin R⁹ für eine Phenylgruppe steht, die gegebenenfalls substituiert ist durch 1, 2 oder 3 der oben genannten Substituenten.

Gemäß einer weiteren bevorzugten Ausführungsform enthalten die erfindungsgemäßen Mittel als Amidverbindung eine Verbindung der Formel II, worin R⁹ für eine Phenylgruppe steht, die in 2-Stellung einen der folgenden Substituenten aufweist:
C₃-C₆-Alkyl, C₅-C₆-Cycloalkenyl, C₅-C₆-Cycloalkyloxy, C₅-C₆-Cycloalkenyloxy, wobei diese Gruppen durch 1, 2 oder 3 C₁-C₄-Alkylgruppen substituiert sein können,
Phenyl, das durch 1 bis 5 Halogenatome und/oder 1 bis 3 Gruppen, die unabhängig voneinander ausgewählt sind unter C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, substituiert ist,
Indanyl oder Oxaindanyl, das gegebenenfalls durch 1, 2 oder 3 C₁-C₄-Alkylgruppen substituiert ist.

Gemäß einer weiteren bevorzugten Ausführungsform enthalten die erfindungsgemäßen Mittel als Amidverbindung eine Verbindung der Formel IIa, 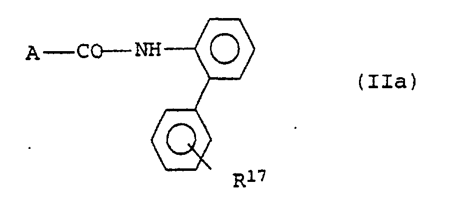 worin
- A: für 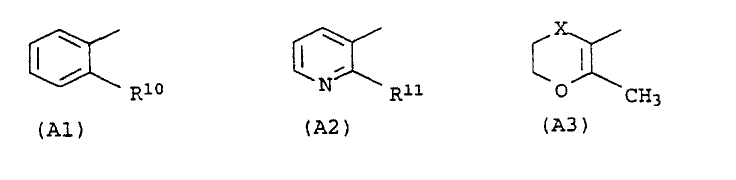 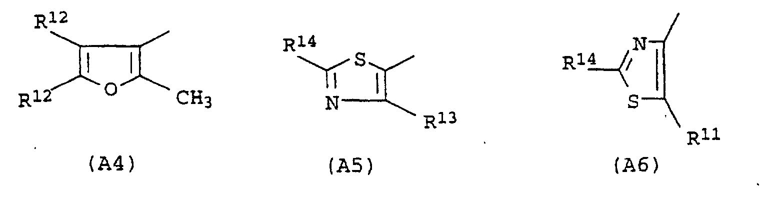 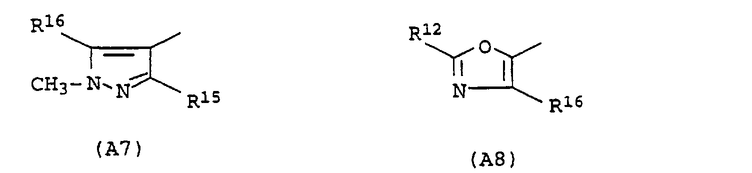 steht;
- X: für Methylen, Schwefel, Sulfinyl oder Sulfonyl (SO₂) steht,
- R¹⁰: für Methyl, Difluormethyl, Trifluormethyl, Chlor, Brom oder Jod steht,
- R¹¹: für Trifluormethyl oder Chlor steht,
- R¹²: für Wasserstoff oder Methyl steht,
- R¹³: für Methyl, Difluormethyl, Trifluormethyl oder Chlor steht,
- R¹⁴: für Wasserstoff, Methyl oder Chlor steht,
- R¹⁵: für Methyl, Difluormethyl oder Trifluormethyl steht,
- R¹⁶: für Wasserstoff, Methyl, Difluormethyl, Trifluormethyl oder Chlor steht,
- R¹⁷: für C₁-C₄-Alkyl, C₁-C₄-Alkoxy, C₁-C₄-Alkylthio oder Halogen steht.

Gemäß einer besonders bevorzugten Ausführungsform enthalten die Mittel als Amidverbindung eine Verbindung der Formel IIb 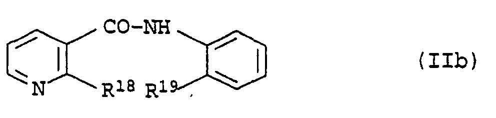 worin
- R¹⁸: für Halogen steht und
- R¹⁹: für Phenyl steht, das durch Halogen substituiert ist.

Brauchbare Amidverbindungen sind in der EP-A-545 099 und 589 301, auf die hiermit in vollem Umfang Bezug genommen wird, genannt.

Die Herstellung der Amidverbindungen der Formel II ist beispielsweise aus der EP-A-545 099 oder 589 301 bekannt oder kann nach analogen Verfahren erfolgen.

Um die synergistische Wirkung zu entfalten, setzt man die Wirkstoffe I und II üblicherweise in einem Gewichtsverhältnis ein, das im Bereich von 20:1 bis 1:20, vorzugsweise 10:1 bis 1:5, insbesondere 3:1 bis 1:1 liegt.

Gegenstand der Erfindung ist auch ein Verfahren zur Bekämpfung von Schadpilzen, das dadurch gekennzeichnet ist, daß man die Pilze, deren Lebensraum oder die vor Pilzbefall zu schützenden Materialien, Pflanzen, Samen, Böden, Flächen oder Räume mit einem wie oben definierten Mittel behandelt, wobei die Anwendung der Wirkstoffe gleichzeitig, und zwar gemeinsam oder getrennt, oder nacheinander erfolgen kann.

Die erfindungsgemäßen Mittel können beispielsweise in Form von direkt versprühbaren Lösungen, Pulvern Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Normalerweise werden die Pflanzen mit den Wirkstoffen besprüht oder bestäubt oder die Samen der Pflanzen mit den Wirkstoffen behandelt.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Waser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole, sowie Fettalkoholglykolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isoctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl,Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Beispiele für solche Zubereitungen, welche die Wirkstoffe im Gewichtsverhältnis von 1:1 enthalten, sind:
I. eine Lösung aus 90 Gew.-Teilen der Wirkstoffe und 10 Gew.-Teilen N-Methylpyrrolidon, die zur Anwendung in Form kleinster Tropfen geeignet ist;
II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;
III.eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;
IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;
V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;
VI. eine innige Mischung aus 3 Gew.-Teilen der Wirkstoffe und 97 Gew.-Teilen feinteiligem Kaolin; dieses Stäubemittel enthält 3 Gew.-% Wirkstoff;
VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;
VIII.eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;
IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die erfindungsgemäßen Mittel zeichnen sich durch eine hervorragende Wirksamkeit gegen ein breites Spektrum von pflanzenpathogenen Pilzen, insbesondere gegen Botrytis aus. Sie sind zum Teil systemisch wirksam, (d.h. sie können von der behandelten Pflanze ohne Wirkungsverlust aufgenommen und gegebenenfalls in der Pflanze transportiert werden) und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Mittel werden angewendet, indem man die Pilze oder die vor Pilzbefall zu schützenden Saatgüter, Pflanzen, Materialien oder den Erdboden mit einer fungizid wirksamen Menge der Wirkstoffe behandelt.

Die Anwendung erfolgt vor oder nach der Infektion der Materialien, Pflanzen oder Samen durch die Pilze.

Speziell eignen sich die Mittel zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Unicinula necator an Reben,
Venturia inaequalis (Schorf) an Äpfeln
Helminthosporium-Arten an Getreide,
Septoria nodorum an Weizen,
Botrytis cinerea (Grauschimmel) an Erdbeeren, Reben
Cercospora arachidicola an Erdnüssen,
Pseudocercosporella herpotrichoides an Weizen, Gerste,
Pyricularia oryzae an Reis,
Fusarium- und Verticillium-Arten an verschiedenen Pflanzen,
Alternaria-Arten an Gemüse und Obst,
Monilinia-Arten in Obst,
Sclerotinia-Arten in Raps und Gemüse.

Die Anwendung gegen Botrytis ist bevorzugt.

Die Mittel können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise 0,01 bis 10 g je Kilogramm Saatgut benötigt.

Die erfindungsgemäßen Mittel können in der Anwendungsform als Fungizide auch andere Wirkstoffe enthalten, z.B. Herbizide, Insektizide, Wachstumsregulatoren, Fungizide oder auch Düngemittel.

Beim Vermischen mit Fungiziden erhält man dabei in vielen Fällen eine Vergrößerung des fungiziden Wirkungsspektrums.

Die folgende Liste von Fungiziden, mit denen die erfindungsgemäβen Verbindungen gemeinsam angewendet werden können, soll die Kombinationsmöglichkeiten erläutern, nicht aber einschränken:
Schwefel,
Dithiocarbonate und deren Derivate, wie Ferridimethyldithiocarbamat,
Zinkdimethyldithiocarbamat,
Zinkethylenbisdithiocarbamat,
Manganethylenbisdithiocarbamat,
Mangan-Zink-ethylendiamin-bis-dithiocarbamat,
Tetramethylthiuramdisulfide,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat),
N,N'-Polypropylen-bis(thiocarbamoyl)-disulfid,
Nitroderivate, wie Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat,
5-Nitro-isophthalsäure-di-isopropylester:
heterocyclische Substanzen, wie 2-Heptadecyl-2-imidazolin-acetat,
2,4-Dichlor-6-(o-chloranilino)-s-triazin,
O,O-Diethyl-phthalimidophosphonothioat,
5-Amino-1-βbis-(dimethylamino)-phosphinyl)0-3-phenyl-1,2,4-triazol,
2,3-Dicyano-1,4-dithioanthrachinon,
2-Thio-1,3-dithioloß4,5-b'chinoxalin,
1-(Butylcarbamoyl)2-benzimidazol)-carbaminsäuremethylester,
2-Methoxycarbonylamino-benzimidazol,
2-(Furyl-(2))-benzimidazol,
2-(Thiazolyl-(4))-benzimidazol,
N-(1,1,2,2-Tetrachlorethylthio)-tetrahydrophthalimid,
N-Trichlormethylthio-tetrahydrophthalimid,
N-Trichlormethylthio-phthalimid,
N-Dichlorfluormethylthio-N',N'-dimethyl-N-phenyl-schwefelsäurediamid,
5-Ethoxy-3-trichlormethyl-1,2,3-thiadiazol,
2-Rhodanmethylthiobenzthiazol,
1,4-Dichlor-2,5-dimethoxybenzol,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin,
2,3-Dihydro-5-carboxanilido-6-methyl-1,4-oxathiin-4,4-dioxid,
2-Methyl-5,6-dihydro-4H-pyran-3-carbonsäureanilid,
2-Methyl-furan-3-carbonsäureanilid,
2,5-Dimethyl-furan-3-carbonsäureanilid,
2,4,5-Trimethyl-furan-3-carbonsäureanilid,
2,5-Dimethyl-furan-3-carbonsäurecyclohexylamid,
N-Cyclohexyl-N-methoxy-2,5-dimethyl-furan-3-carbonsäureamid,
2-Methyl-benzoesäureanilid,
2-Jod-benzoesäureanilid,
N-Formyl-N-morpholin-2,2,2-trichlorethylacetat,
Piperazin-1,4-diylbis-(1-(2,2,2-trichlorethyl)-formamid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
N-[3-(p-tert.-Butylphenyl)-2-methylpropyl]-cis-2,6-dimethylmorpholin,
N-[3-(p-tert.-Butylphenyl)-2-methylpropyl]-piperidin,
1-[2- (2,4-Dichlorphenyl)-4-ethyl-1,3-dioxolan-2-yl-ethyl]-1H,1,2,4-triazol
1-[2-(2,4-Dichlorphenyl)-4-n-propyl)-1,3-dioxolan-2-yl-ethyl]-1H-1,2,4-triazol
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenyl)-3,3-dimethyl)-1-(1H-1,2,4-triazol-1-yl)-2-butanol,
α-(2-Chlorphenyl)-a-(4-chlorphenyl)-5-pyrimidinmethanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol,
sowie verschiedene Fungizide, wie Dodecylguanidinacetat,
3-[3-(3,5-Dimethyl)-2-oxycyclohexyl)-2-hydroxyethyl)]glutarimid, Hexachlorbenzol,
DL-Methyl-N-(2,6-dimethylphenyl)-N-furoyl(2)-alaninat,
DL-N-(2,6-Dimethylphenyl)-N-(2'-methoxyacetyl)-alanin-methylester,
N-(2,6-Dimethylphenyl)-N-chloracetyl-D,L-2-aminobutyrolacton,
DL-N-(2,6-Dimethylphenyl)-N-(phenylacetyl)-alaninmethylester,
5-Methyl-5-vinyl-3-(3,5-dichlorphenyl) -2,4-dioxo-1,3-oxazolidin,
3-[3,5-Dichlorphenyl-(5-methyl-5-methoxymethyl]-1,3-oxazolidin-2,4-dion,
3-(3,5-Dichlorphenyl)-1-isopropylcarbamoylhydantoin,
N- (3,5-Dichlorphenyl)-1,2-dimethylcyclopropan-1,2-dicarbonsäureimid,
2-Cyano[N-(ethylaminocarbonyl)-2-methoximino] -acetamid,
1-[2-(2,4-Dichlorphenyl)-pentyl]-1H-1,2,4-triazol,
2,4-Difluor-α-(1H-1,2,4-triazolyl-1-methyl)-benzhydrylalkohol,
N-(3-Chlor-2,6-dinitro-4-trifluormethyl-phenyl)-5-trifluormethyl-3-chlor-2-aminopyridin,
1-((bis-(4-Fluorphenyl)-methylsilyl)-methyl-lH-1,2,4-triazol,
[2-(4-Chlorphenyl)ethyl]-(1,1-dimethylethyl)-1H-1,2,4-triazol-1-ethanol, 1-[3-(2-Chlorphenyl)-1-(4-fluorphenyl)oxiran-2-yl-methyl]-1H-1,2,4-triazol,
Strobilurine wie Methyl-E-methoximino-[α-(o-tolyloxy)-o-tolyl]acetat, Methyl-E-2-{2-[6-(2-cyanophenoxy)pyrimidin-4-yl-oxy]phenyl}-3-methoxyacrylat, Methyl-E-methoximino-[α-(2,5-di-methyloxy)-o-tolyl]acetamid,
Anilino-Pyrimidine wie N-(4,6-dimethylpyrimidin-2-yl)anilin,
N-[4-methyl-6-(1-propinyl)pyrimidin-2-yl]anilin, N-(4-methyl-6-cyclopropyl-pyrimidin-2-yl)anilin,
Phenylpyrrole wie 4-(2,2-Difluor-1,3-benzodioxol-4-yl)pyrrol-3-carbonitril,
Zimtsäureamide wie 3-(4-chlorphenyl)-3-(3,4-dimethoxyphenyl)acrylsäuremorpholid.

Die synergistische Wirkung der erfindungsgemäßen Mittel wird anhand der folgenden Anwendungsbeispiele erläutert, wobei als Wirkstoffe I die Verbindungen der Formel I.2.1, I.2.5 und I.2.7 gemäß Tabelle I.2 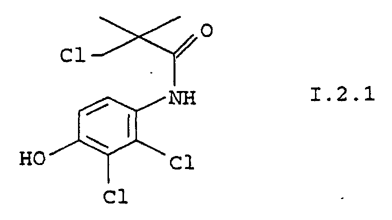 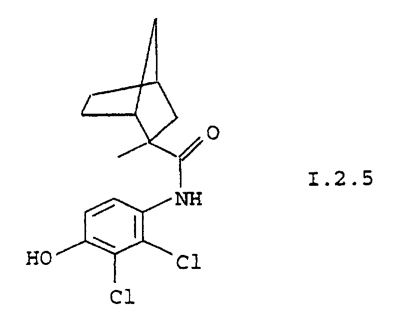 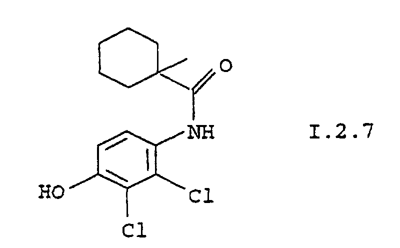 und als Amidverbindung die Verbindung der Formel II.1 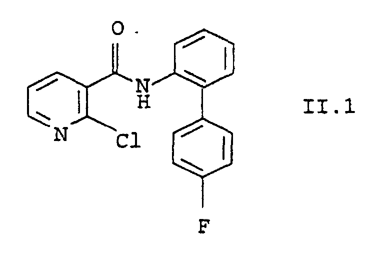 zur Anwendung kommen.

### Anwendungsbeispiel 1

### Wirksamkeit gegen Botrytis cinerea

Paprikasämlinge der Sorte "Neusiedler Ideal Elite" wurden, nachdem sich 4 bis 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 bis 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten (Befall 100%).

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967) und mit den beobachteten Wirkungsgraden verglichen. Die Ergebnisse sind in der nachfolgenden Tabelle 1 angegeben.

**Tabelle 2**

| Wirkstoff | Wirkstoffkonzentration in ppm | | Wirkungsgrad in % der Kontrolle | |
|---|---|---|---|---|
| | | | beobachtet | berechnet* |
| Kontrolle (unbehandelt) | -- | -- | 0 | -- |
| II.1 | -- | 100 | 0 | -- |
| | -- | 25 | 0 | -- |
| I.2.1 | 25 | -- | 40 | -- |
| I.2.5 | 100 | -- | 80 | -- |
| | 25 | | 65 | |
| I.2.7 | 100 | -- | 70 | -- |
| | 25 | | 35 | |
| I.2.1 + II.1 | 25 | 25 | 84 | 40 |
| I.2.5 + II.1 | 100 | 25 | 99 | 80 |
| | 25 | 25 | 99 | 65 |
| I.2.7 + II.1 | 100 | 25 | 98 | 70 |
| | 25 | 25 | 98 | 35 |

| | | | | |
|---|---|---|---|---|
| * berechnet nach der Colby-Formel | | | | |

Aus den Ergebnissen des Versuchs geht hervor, daß der beobachtete Wirkungsgrad in allen Mischungsverhältnissen höher ist als der nach der Colby-Formel vorausberechnete Wirkungsgrad, d.h. es liegt ein synergistischer Effekt vor.

### Anwendungsbeispiel 2

### Wirksamkeit gegen Botrytis cinerea an Paprikaschoten

Scheiben von grünen Paprikaschoten wurden mit wäßriger Wirkstoffaufbereitung, die 80% Wirkstoff und 20% Emulgiermittel in der Trockensubstanz enthielt, tropfnaß besprüht. 2 Stunden nach dem Antrocknen des Spritzbelages wurden die Fruchtscheiben mit einer Sporensuspension von Botrytis cinerea, die 1,7 x 10⁶ Sporen pro ml einer 2%igen Biomalzlösung enthielt, inokuliert. Die inokulierten Fruchtscheiben wurden anschließend in feuchten Kammern bei 18°C für 4 Tage inokuliert. Dann erfolgte visuell die Auswertung der Botrytis-Entwicklung auf den befallenen Fruchtscheiben (100% Befall).

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0% Befall. Die zu erwartenden Wirkungsgrade für Wirkstoffkombinationen wurden nach der Colby-Formel (Colby, S.R. "Calculating synergistic and antagonistic responses of herbicide Combinations", Weeds, 15, S.20 bis 22, 1967) ermittelt und mit den beobachteten Wirkungsgraden verglichen. Die Ergebnisse sind in der nachfolgenden Tabelle 2 angegeben.

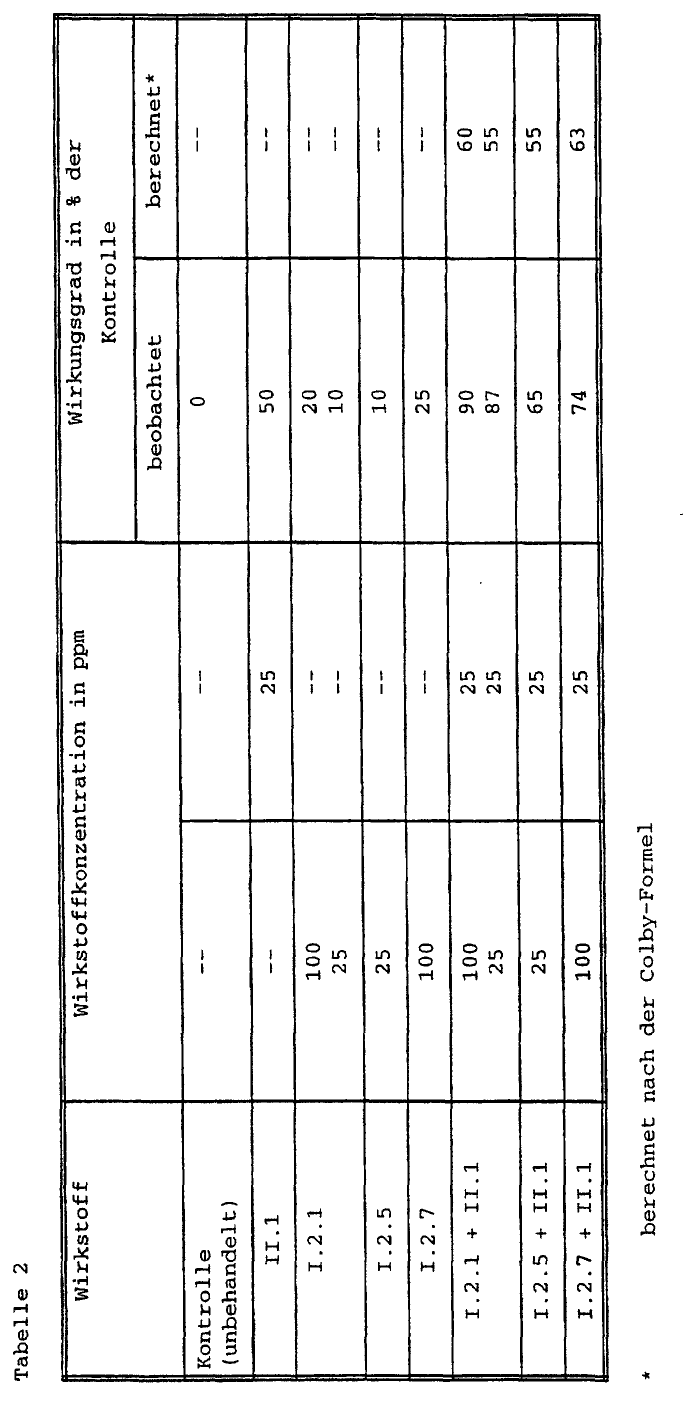

Aus den Ergebnissen des Versuchs geht hervor, daß der beobachtete Wirkungsgrad in allen Mischungsverhältnissen höher ist als der nach der Colby-Formel vorausberechnete Wirkungsgrad, d.h. es liegt ein synergistischer Effekt vor.

## Patentansprüche

1. Mittel zur Bekämpfung von Schadpilzen, enthaltend in einem festen oder flüssigen Träger
a) mindestens ein p-Hydroxyanilinderivat der Formel I 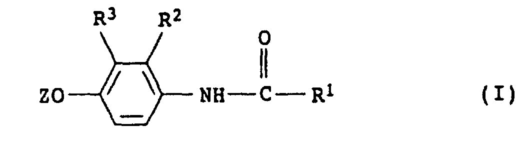 worin
R¹ für Wasserstoff, Alkyl, welches partiell oder vollständig halogeniert sein und/oder eine oder zwei der folgenden Gruppen tragen kann: Alkoxy, Halogenalkoxy, Alkylthio, Cycloalkyl, Cycloalkenyl, wobei die cyclischen Gruppen ihrerseits ein, zwei oder drei Halogenatome, Alkylgruppen und/oder Alkoxygruppen tragen können und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio;
Cycloalkyl oder Cycloalkenyl, wobei diese Reste partiell oder vollständig halogeniert sein und/oder 1, 2, 3, 4 oder 5 der folgenden Gruppen tragen können: Alkyl, Halogenalkyl, Alkoxy, Halogenalkoxy und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio;
C₆-C₁₅-Bicycloalkyl oder C₇-C₁₅-Bicycloalkenyl, wobei diese Reste partiell oder vollständig halogeniert sein und/oder 1, 2, 3, 4 oder 5 der folgenden Gruppen tragen können: Alkyl, Halogenalkyl, Alkoxy, Halogenalkoxy und Aryl, welches partiell oder vollständig halogeniert sein und/oder einen, zwei oder drei der folgenden Substituenten tragen kann: Nitro, Cyano, Alkyl, Halogenalkyl, Alkoxy, Halogenalkoxy und Alkylthio; steht;
R² und R³ unabhängig voneinander für Halogen, Alkyl, Halogenalkyl, Alkoxy oder Halogenalkoxy stehen;
Z für H oder R⁴-(CO)- steht, worin
R⁴ für die folgenden Reste steht:
Alkyl oder Alkenyl, wobei diese Gruppen partiell oder vollständig halogeniert sein und/oder einen der folgenden Reste tragen können: Alkoxy, Halogenalkoxy, Alkylthio, Cycloalkyl, Cycloalkenyl oder Aryl, wobei die aromatischen Reste ihrerseits eine, zwei oder drei der folgenden Gruppen tragen können: Nitro, Cyano, Halogen, Alkyl, Halogenalkyl, Alkoxy, Halogenalkoxy und Alkylthio;
Cycloalkyl oder Cycloalkenyl, wobei diese Gruppen einen, zwei oder drei der folgenden Reste tragen können: Halogen, Alkyl, Halogenalkyl und Alkoxy;
Aryl, welches partiell oder vollständig halogeniert sein und/oder einen, zwei oder drei der folgenden Reste tragen kann: Nitro, Cyano, Alkyl, Halogenalkyl, Alkoxy, Halogenalkoxy und Alkylthio;
OR⁵ oder NR⁶R⁷, worin
R⁵ für Alkyl oder Alkenyl steht, wobei diese Gruppen partiell oder vollständig halogeniert sein und/oder einen der folgenden Reste tragen können: Alkoxy, Halogenalkoxy, Alkylthio, Cycloalkyl, Cycloalkenyl oder Aryl, wobei die aromatischen Reste ihrerseits eine, zwei oder drei der folgenden Gruppen tragen können: Nitro, Cyano, Halogen, Alkyl, Halogenalkyl, Alkoxy, Halogenalkoxy und Alkylthio;
oder für Cycloalkyl oder Cycloalkenyl steht, wobei diese Gruppen einen, zwei oder drei der folgenden Reste tragen können: Halogen, Alkyl, Halogenalkyl und Alkoxy;
oder für Aryl steht, welches partiell oder vollständig halogeniert sein und/oder einen, zwei oder drei der folgenden Reste tragen kann: Nitro, Cyano, Alkyl, Halogenalkyl, Alkoxy, Halogenalkoxy und Alkylthio;
R⁶ für Alkyl oder Alkenyl, wobei diese Gruppen partiell oder vollständig halogeniert sein und/oder einen der folgenden Reste tragen können: Alkylthio, Cycloalkyl, Cycloalkenyl oder Aryl, wobei die aromatischen Reste ihrerseits eine, zwei oder drei der folgenden Gruppen tragen können: Nitro, Cyano, Halogen, Alkyl, Halogenalkyl, Alkoxy, Halogenalkoxy und Alkylthio;
Cycloalkyl oder Cycloalkenyl, wobei diese Gruppen einen, zwei oder drei der folgenden Reste tragen können: Halogen, Alkyl, Halogenalkyl und Alkoxy;
Aryl, welches partiell oder vollständig halogeniert sein und/oder einen, zwei oder drei der folgenden Reste tragen kann: Nitro, Cyano, Alkyl, Halogenalkyl, Alkoxy, Halogenalkoxy und Alkylthio;
steht; und
R⁷ für Wasserstoff oder Alkyl steht,
und
b) mindestens eine Amidverbindung der Formel II
A - CO - NR⁸ - R⁹ (II)
worin
A für Pyridyl, Thiazolyl, Pyrazolyl oder Oxazolyl steht, wobei diese Gruppen 1, 2 oder 3 Substituenten aufweisen können, die unabhängig voneinander ausgewählt sind unter Alkyl, Halogen, Difluormethyl und Trifluormethyl;
R⁸ für ein Wasserstoffatom, Alkyl oder Alkoxy steht;
R⁹ für Phenyl steht, das in der 2-Position eine Phenylgruppe aufweist, die durch 1 bis 5 Halogenatome und/ oder 1 bis 3 Gruppen, die unabhängig voneinander ausgewählt sind unter C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, substituiert ist.

2. Mittel nach Anspruch 1, wobei in den Verbindungen der Formel I
z für Wasserstoff steht.

3. Mittel nach Anspruch 2, wobei in den Verbindungen der Formel I
R¹ für Alkyl, welches partiell oder vollständig halogeniert sein und/oder eine oder zwei der folgenden Gruppen tragen kann: Alkoxy, Halogenalkoxy, Cycloalkyl, Cycloalkenyl, wobei die cyclischen Gruppen ihrerseits ein, zwei oder drei Halogenatome und/oder Alkylgruppen tragen können und Aryl, welches partiell oder vollständig halogeniert sein und/oder einen, zwei oder drei der folgenden Substituenten tragen kann: Alkyl und Halogenalkyl;
Cycloalkyl oder Cycloalkenyl, wobei diese Reste partiell oder vollständig halogeniert sein und/oder 1, 2, 3, 4 oder 5 der folgenden Gruppen tragen können: Alkyl, Halogenalkyl, und Aryl, welches partiell oder vollständig halogeniert sein und/oder einen, zwei oder drei der folgenden Substituenten tragen kann: Alkyl und Halogenaikyl;
C₆-C₁₅-Bicycloalkyl oder C₇-C₁₅-Bicycloalkenyl, wobei diese Reste partiell oder vollständig halogeniert sein und/oder 1, 2, 3, 4 oder 5 Alkyl- oder Halogenalkylgruppen tragen können, steht;
R² und R³ unabhängig voneinander für Halogen, Alkyl und Halogenalkyl stehen.

4. Mittel nach Anspruch 3, wobei in den Verbindungen der Formel I
R¹ für Alkyl, welches partiell oder vollständig halogeniert sein und/oder Aryl tragen kann, welches seinerseits partiell oder vollständig halogeniert sein und/oder Alkyl tragen kann, steht;
Cycloalkyl oder Cycloalkenyl, wobei diese Reste partiell oder vollständig halogeniert sein und 1, 2, 3, 4 oder 5 Alkylgruppen tragen können;
Bicycloalkyl oder Bicycloalkenyl, wobei diese Reste partiell oder vollständig halogeniert sein und/oder 1, 2, 3, 4 oder 5 Alkylgruppen tragen können, steht; und
R² und R³ unabhängig voneinander für Halogen, insbesondere Fluor oder Chlor oder Alkyl stehen.

5. Mittel nach Anspruch 1, wobei es sich bei der Verbindung der Formel I um eine Verbindung aus folgender Tabelle handelt:

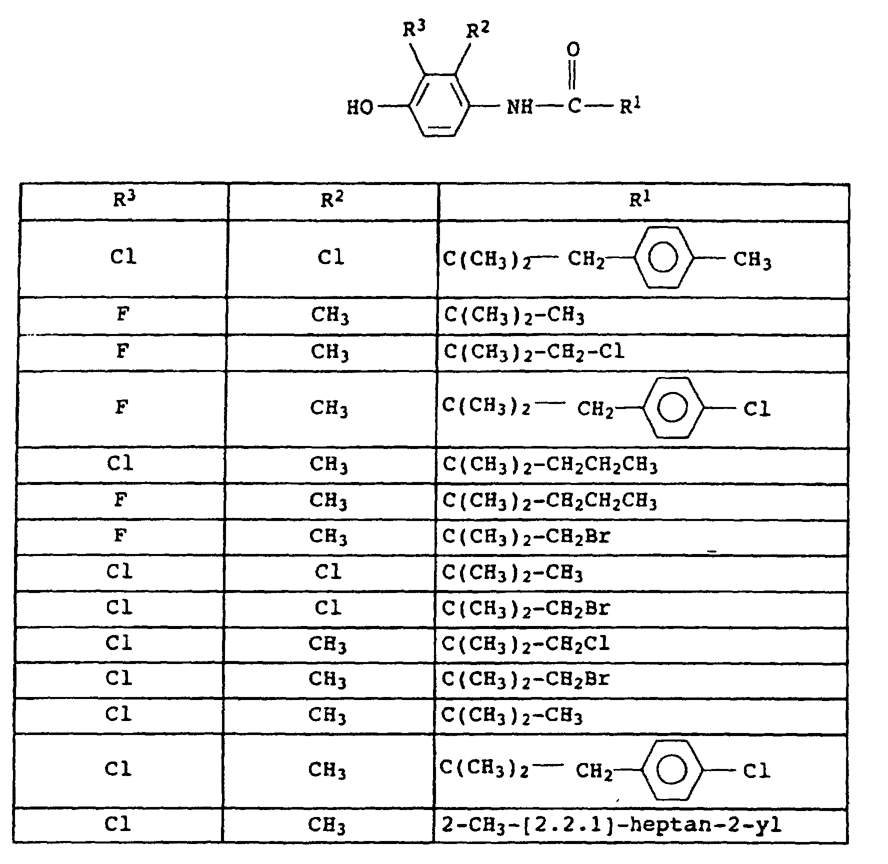

6. Mittel nach Anspruch 1, wobei es sich bei der Verbindung der Formel I um eine Verbindung aus folgender Tabelle handelt:

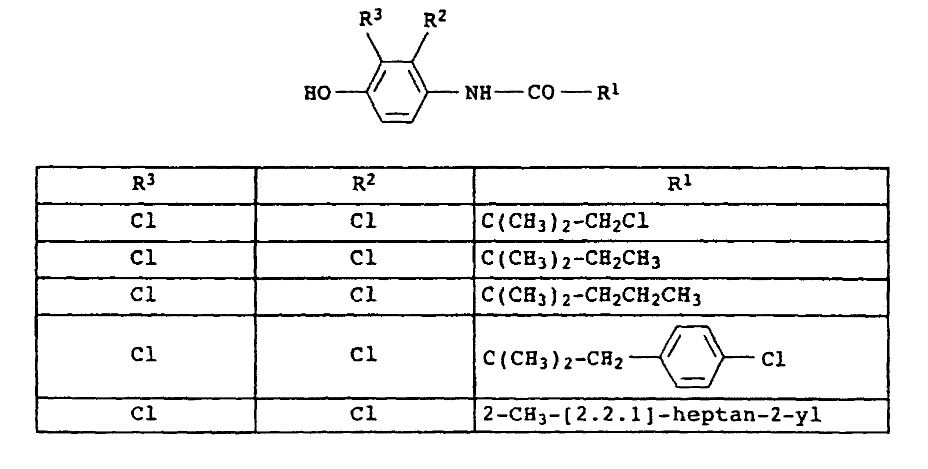

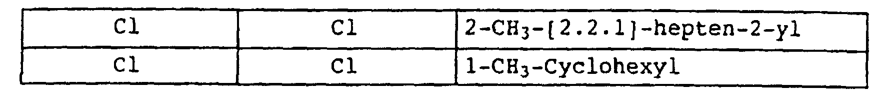

7. Mittel nach einem der Ansprüche 1 bis 6, das als Amidverbindung eine Verbindung der Formel II enthält, in welcher der Rest A für eine der folgenden Gruppen steht:
Pyridin-3-yl, das gegebenenfalls in 2-Stellung durch Halogen, Methyl, Difluormethyl oder Trifluormethyl substituiert ist;
Thiazol-5-yl, das gegebenenfalls in 2- und/oder 4-Stellung durch Methyl, Chlor, Difluormethyl oder Trifluormethyl substituiert ist;
Thiazol-4-yl, das gegebenenfalls in 2- und/oder 5-Stellung durch Methyl, Chlor, Difluormethyl oder Trifluormethyl substituiert ist;
1-Methylpyrazol-4-yl, das gegebenenfalls in 3- und/oder 5-Stellung durch Methyl, Chlor, Difluormethyl oder Trifluormethyl substituiert ist; oder
Oxazol-5-yl, das gegebenenfalls in 2- und/oder 4-Stellung durch Methyl oder Chlor substituiert ist.

8. Mittel nach einem der vorhergehenden Ansprüche, das als Amidverbindung eine Verbindung der Formel IIa enthält: 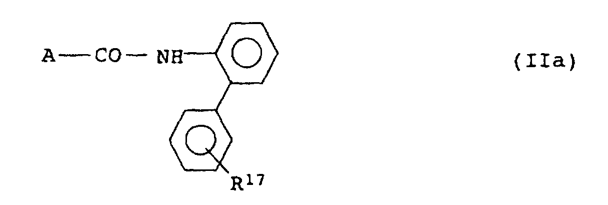 worin
A für 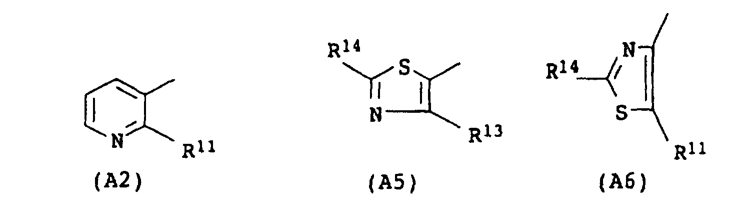 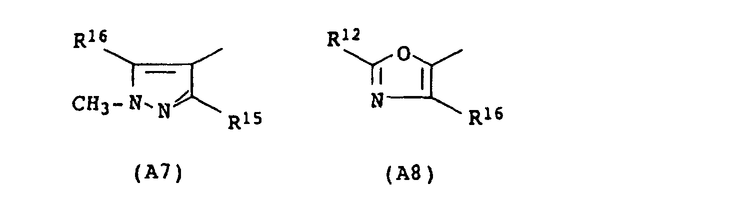 steht;
R¹¹ für Trifluormethyl oder Chlor steht,
R¹² für Wasserstoff oder Methyl steht,
R¹³ für Methyl, Difluormethyl, Trifluormethyl oder Chlor steht,
R¹⁴ für Wasserstoff, Methyl oder Chlor steht,
R¹⁵ für Methyl, Difluormethyl oder Trifluormethyl steht,
R¹⁶ für Wasserstoff, Methyl, Difluormethyl, Trifluormethyl oder Chlor steht,
R¹⁷ für C₁-C₄-Alkyl, C₁-C₄-Alkoxy, C₁-C₄-Alkylthio oder Halogen steht.

9. Mittel nach einem der Ansprüche 1 bis 6, das als Amidverbindung eine Verbindung der Formel IIb enthält 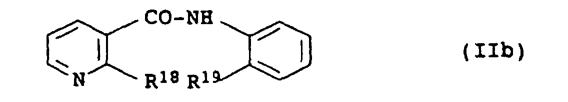 worin
R¹⁸ für Halogen steht und
R¹⁹ für Phenyl steht, das durch Halogen substituiert ist.

10. Mittel nach Anspruch 9, das als Amidverbindung eine Verbindung der nachfolgenden Formeln enthält:

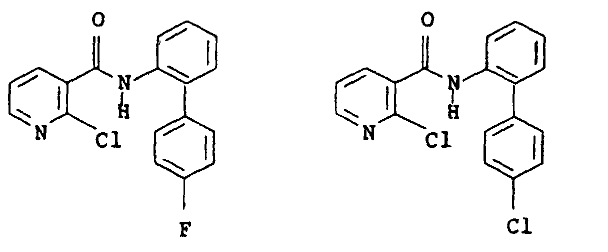

11. Mittel nach einem der vorhergehenden Ansprüche, das in zwei Teilen konditioniert ist, wobei der eine Teil den Wirkstoff I in einem festen oder flüssigen Träger enthält und der andere Teil die Amidverbindung der Formel II in einem festen oder flüssigen Träger enthält.

12. Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einem Mittel gemäß einem der Ansprüche 1 bis 11 behandelt, wobei die Anwendung der Wirkstoffe gleichzeitig, und zwar gemeinsam oder getrennt oder nacheinander, erfolgen kann.

## Claims

1. A composition for controlling harmful fungi, containing in a solid or liquid carrier
a) at least one p-hydroxyaniline derivative of the formula I 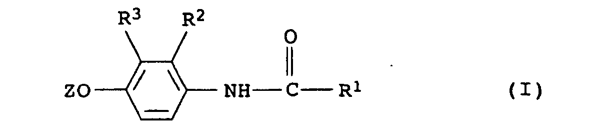 where
R¹ is hydrogen, alkyl, which can be partially or completely halogenated and/or can carry one or two of the following groups: alkoxy, haloalkoxy, alkylthio, cycloalkyl, cycloalkenyl, it being possible for the cyclic groups for their part to carry one, two or three halogen atoms, alkyl groups and/or alkoxy groups, and aryl which can be partially or completely halogenated and/or can carry one, two or three of the following substituents: nitro, cyano, alkyl, haloalkyl, alkoxy, haloalkoxy and alkylthio;
cycloalkyl or cycloalkenyl, it being possible for these radicals to be partially or completely halogenated and/or to carry 1, 2, 3, 4 or 5 of the following groups: alkyl, haloalkyl, alkoxy, haloalkoxy and aryl, which can be partially or completely halogenated and/or can carry one, two or three of the following substituents: nitro, cyano, alkyl, haloalkyl, alkoxy, haloalkoxy and alkylthio;
C₆-C₁₅-bicycloalkyl or C₇-C₁₅-bicycloalkenyl, it being possible for these radicals to be partially or completely halogenated and/or to carry 1, 2, 3, 4 or 5 of the following groups: alkyl, haloalkyl, alkoxy, haloalkoxy and aryl, which can be partially or completely halogenated and/or can carry one, two or three of the following substituents: nitro, cyano, alkyl, haloalkyl, alkoxy, haloalkoxy and alkylthio;
R² and R³ independently of one another are halogen, alkyl, haloalkyl, alkoxy or haloalkoxy;
Z is H or R⁴-(CO)-, where
R⁴ is the following radicals:
alkyl or alkenyl, it being possible for these groups to be partially or completely halogenated and/or to carry one of the following radicals: alkoxy, haloalkoxy, alkylthio, cycloalkyl, cycloalkenyl or aryl, it being possible for the aromatic radicals for their part to carry one, two or three of the following groups: nitro, cyano, halogen, alkyl, haloalkyl, alkoxy, haloalkoxy and alkylthio;
cycloalkyl or cycloalkenyl, it being possible for these groups to carry one, two or three of the following radicals: halogen, alkyl, haloalkyl and alkoxy;
aryl, which can be partially or completely halogenated and/or can carry one, two or three of the following radicals: nitro, cyano, alkyl, haloalkyl, alkoxy, haloalkoxy and alkylthio;
OR⁵ or NR⁶R⁷, where
R⁵ is alkyl or alkenyl, it being possible for these groups to be partially or completely halogenated and/or to carry one of the following radicals: alkoxy, haloalkoxy, alkylthio, cycloalkyl, cycloalkenyl or aryl, it being possible for the aromatic radicals for their part to carry one, two or three of the following groups: nitro, cyano, halogen, alkyl, haloalkyl, alkoxy, haloalkoxy and alkylthio;
or is cycloalkyl or cycloalkenyl, it being possible for these groups to carry one, two or three of the following radicals: halogen, alkyl, haloalkyl and alkoxy;
or is aryl which can be partially or completely halogenated and/or can carry one, two or three of the following radicals: nitro, cyano, alkyl, haloalkyl, alkoxy, haloalkoxy and alkylthio;
R⁶ is alkyl or alkenyl, it being possible for these groups to be partially or completely halogenated and/or to carry one of the following radicals: alkylthio, cycloalkyl, cycloalkenyl or aryl, it being possible for the aromatic radicals for their part to carry one, two or three of the following groups: nitro, cyano, halogen, alkyl, haloalkyl, alkoxy, haloalkoxy and alkylthio;
cycloalkyl or cycloalkenyl, it being possible for these groups to carry one, two or three of the following radicals: halogen, alkyl, haloalkyl and alkoxy;
aryl, which can be partially or completely halogenated and/or can carry one, two or three of the following radicals: nitro, cyano, alkyl, haloalkyl, alkoxy, haloalkoxy and alkylthio; and
R⁷ is hydrogen or alkyl,
and
b) at least one amide compound of the formula II
A - CO - NR⁸ - R⁹ (II)
where
A is pyridyl, thiazolyl, pyrazolyl or oxazolyl, it being possible for these groups to have 1, 2 or 3 substituents which are selected independently of one another from alkyl, halogen, difluoromethyl and trifluoromethyl;
R⁸ is a hydrogen atom, alkyl or alkoxy;
R⁹ is phenyl, which has a phenyl group in the 2-position which is substituted by 1 to 5 halogen atoms and/or 1 to 3 groups which independently of one another are selected from C₁-C₄-alkyl, C₁-C₄-haloalkyl, C₁-C₄-alkoxy, C₁-C₄-haloalkoxy, C₁-C₄-alkylthio and C₁-C₄-haloalkylthio.

2. A composition as claimed in claim 1, where in the compounds of the formula I
Z is hydrogen.

3. A composition as claimed in claim 2, where in the compounds of the formula I
R¹ is alkyl, which can be partially or completely halogenated and/or can carry one or two of the following groups: alkoxy, haloalkoxy, cycloalkyl, cycloalkenyl, it being possible for the cyclic groups for their part to carry one, two or three halogen atoms and/or alkyl groups, and aryl, which can be partially or completely halogenated and/or can carry one, two or three of the following substituents: alkyl and haloalkyl;
cycloalkyl or cycloalkenyl, it being possible for these radicals to be partically or completely halogenated and/or to carry 1, 2, 3, 4 or 5 of the following groups: alkyl, haloalkyl and aryl, which can be partially or completely halogenated and/or can carry one, two or three of the following substituents: alkyl and haloalkyl;
C₆-C₁₅-bicycloalkyl or C₇-C₁₅-bicycloalkenyl, it being possible for these radicals to be partially or completely halogenated and/or to carry 1, 2, 3, 4 of 5 alkyl or haloalkyl groups;
R² and R³ independently of one another are halogen, alkyl and haloalkyl.

4. A composition as claimed in claim 3, where in the compounds of the formula I
R¹ is alkyl which can be partially or completely halogenated and/or can carry aryl, which for its part can be partially or completely halogenated and/or can carry alkyl;
cycloalkyl or cycloalkenyl, it being possible for these radicals to be partially or completely halogenated and to carry 1, 2, 3, 4 or 5 alkyl groups;
bicycloalkyl or bicycloalkenyl, it being possible for these radicals to be partially or completely halogenated and/or to carry 1, 2, 3, 4 or 5 alkyl groups;
R² and R³ independently of one another are halogen, in particular fluorine or chlorine, or alkyl.

5. A composition as claimed in claim 1, where the compound of the formula I is a compound of the following table:

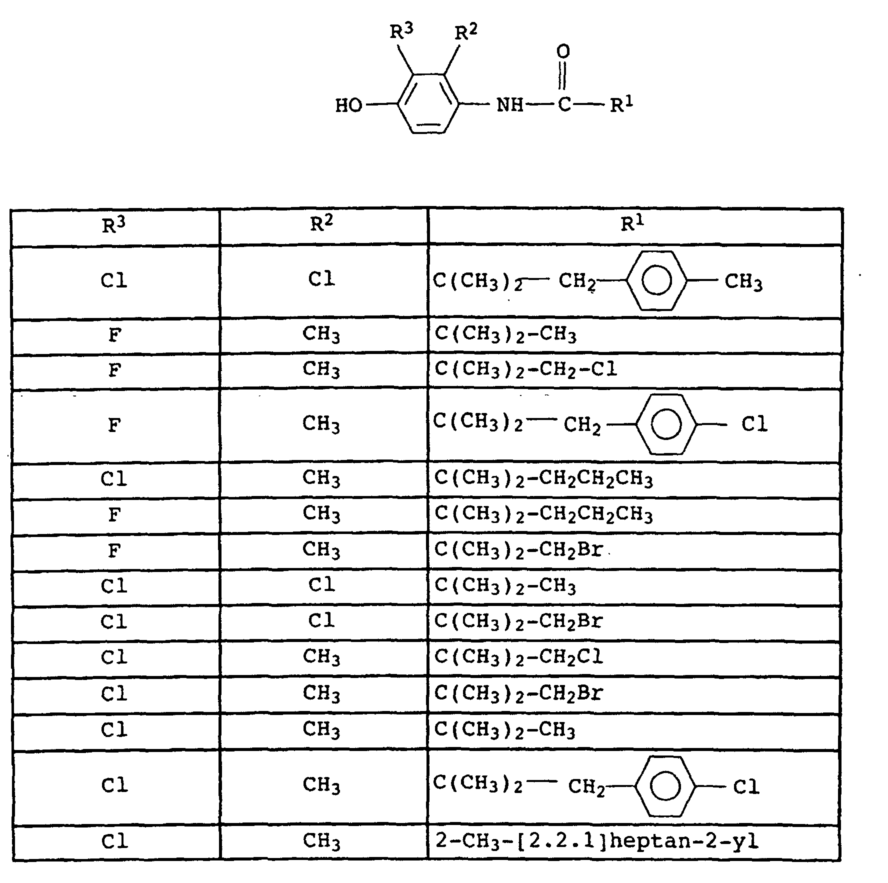

6. A composition as claimed in claim 1, where the compound of the formula I is a compound of the following table:

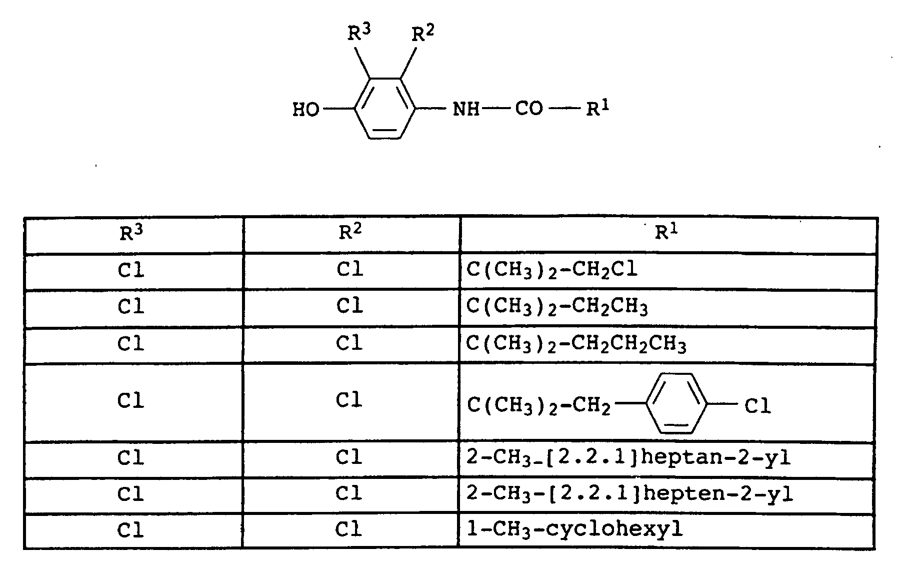

7. A composition as claimed in one of claims 1 to 6, which as amide compound contains a compound of the formula II in which the radical A is one of the following groups:
pyridin-3-yl, which is unsubstituted or substituted in the 2-position by halogen, methyl, difluoromethyl or trifluoromethyl;
thiazol-5-yl, which is unsubstituted or substituted in the 2- and/or 4-position by methyl, chlorine, difluoromethyl or trifluoromethyl;
thiazol-4-yl, which is unsubstituted or substituted in the 2- and/or 5-position by methyl, chlorine, difluoromethyl or trifluoromethyl;
1-Methylpyrazol-4-yl, which is unsubstituted or substitued in the 3- and/or 5-position by methyl, chlorine, difluoromethyl or trifluoromethyl; or
oxazol-5-yl, which is unsubstituted or substituted in the 2- and/or 4-position by methyl or chlorine.

8. A composition as claimed in one of the preceding claims, which as amide compound contains a compound of the formula IIa: 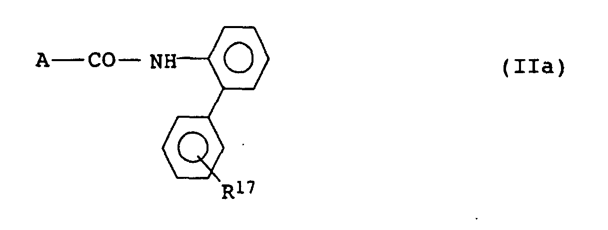 where
A is 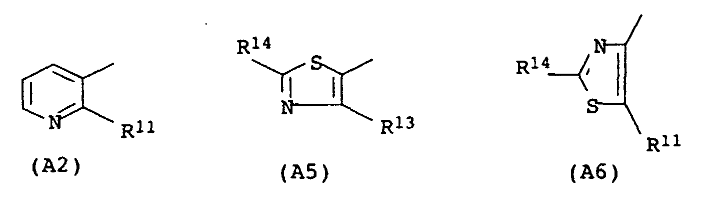 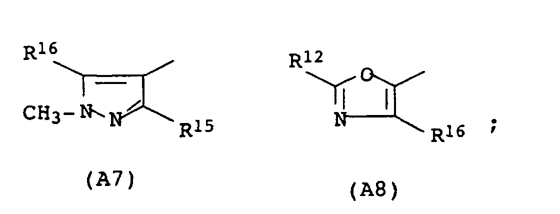
R¹¹ is trifluoromethyl or chlorine,
R¹² is hydrogen or methyl,
R¹³ is methyl, difluoromethyl, trifluoromethyl or chlorine,
R¹⁴ is hydrogen, methyl or chlorine,
R¹⁵ is methyl, difluoromethyl or trifluoromethyl,
R¹⁶ is hydrogen, methyl, difluoromethyl, trifluoromethyl or chlorine,
R¹⁷ is C₁-C₄-alkyl, C₁-C₄-alkoxy, C₁-C₄-alkylthio or halogen.

9. A composition as claimed in one of claims 1 to 6, which as amide compound contains a compound of the formula IIb 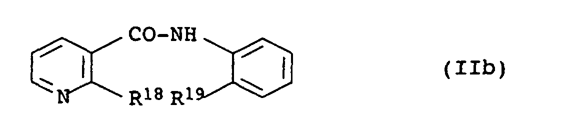 where
R¹⁸ is halogen and
R¹⁹ is phenyl which is substituted by halogen.

10. A composition as claimed in claim 9, which as amide compound contains a compound of the following formula:

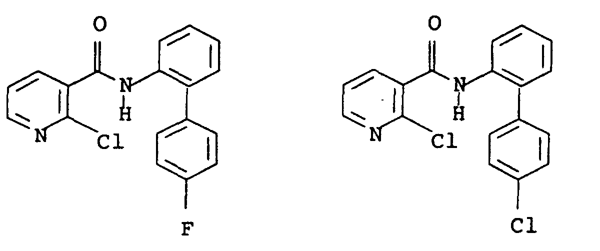

11. A composition as claimed in one of the preceding claims, which is formulated in two parts, one part containing the active compound I in a solid or liquid carrier and the other part containing the amide compound of the formula II in a solid or liquid carrier.

12. A method of controlling harmful fungi, which comprises treating the fungi, their habitat or the materials, plants, seeds, soils, surfaces or spaces to be protected from fungal attack with a composition as claimed in one of claims 1 to 11, it being possible for the active compounds to be applied simultaneously, to be precise together or separately, or in succession.

## Revendications

1. Produit pour la lutte contre les mycètes nuisibles contenant, dans un véhicule solide ou liquide
a) au moins un dérivé de lap-hydroxyaniline répondant à la formule I 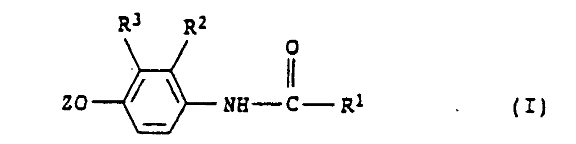 dans laquelle
R¹ représente l'hydrogène, un groupe alkyle qui peut être halogéné en totalité ou en partie et/ou peut porter un ou deux des substituants suivants : alcoxy, halogénoalcoxy, alkylthio, cycloalkyle, cycloalcényle, les substituants cycliques pouvant eux-mêmes porter un, deux ou trois atomes d'halogènes, groupes alkyle et/ou alcoxy, ou un groupe aryle, qui peut être halogéné en totalité ou en partie et/ou peut porter un, deux ou trois des substituants suivants : nitro, cyano, alkyle, halogénoalkyle, alcoxy, halogénoalcoxy et alkylthio ;
un groupe cycloalkyle ou cycloalcényle, chacun d'eux pouvant être halogéné en totalité ou en partie et/ou pouvant porter un, deux, trois, quatre ou cinq des substituants suivants : alkyle, halogénoalkyle, alcoxy, halogénoalcoxy et aryle, qui peut être halogéné en totalité ou en partie et/ou peut porter un, deux ou trois des substituants suivants : nitro, cyano, alkyle, halogénoalkyle, alcoxy, halogénoalcoxy et alkylthio ;
un groupe bicycloalkyle en C6-C15 ou bicycloalcényle en C7-C15, chacun d'eux pouvant être halogéné en totalité ou en partie et/ou pouvant porter un, deux, trois, quatre ou cinq des substituants suivants : alkyle, halogénoalkyle, alcoxy, halogénoalcoxy et aryle, lequel peut être halogéné en totalité ou en partie et/ou peut porter un, deux ou trois des substituants suivants : nitro, cyano, alkyle, halogénoalkyle, alcoxy, halogénoalcoxy et alkylthio ;
R² et R³ représentent chacun, indépendamment l'un de l'autre, un halogène, un groupe alkyle halogénoalkyle, alcoxy ou halogénoalcoxy ;
Z représente H ou R⁴-(CO)- dans lequel
R⁴ représente les groupes suivants :
alkyle ou alcényle, chacun d'eux pouvant être halogéné en totalité ou en partie et/ou pouvant porter un des substituants suivants : alcoxy, halogénoalcoxy, alkylthio, cycloalkyle, cycloalcényle ou aryle, les groupes aromatiques pouvant eux-mêmes porter un, deux ou trois des substituants suivants : nitro, cyano, halogéno, alkyle, halogénoalkyle, alcoxy, halogénoalcoxy et alkylthio ;
cycloalkyle ou cycloalcényle, chacun d'eux pouvant porter un, deux ou trois des substituants suivants : halogéno, alkyle, halogénoalkyle et alcoxy ;
aryle, qui peut être halogéné en totalité ou en partie et/ou peut porter un, deux ou trois des substituants suivants : nitro, cyano, alkyle, halogénoalkyle, alcoxy, halogénoalcoxy et alkylthio ;
OR⁵ ou NR⁶R⁷ dans lesquels
R⁵ représente un groupe alkyle ou alcényle, chacun d'eux pouvant être halogéné en totalité ou en partie et/ou pouvant porter un des substituants suivants : alcoxy, halogénoalcoxy, alkylthio, cycloalkyle, cycloalcényle ou aryle, les groupes aromatiques pouvant eux-mêmes porter un, deux ou trois des substituants suivants : nitro, cyano, halogéno, alkyle, halogénoalkyle, alcoxy, halogénoalcoxy et alkylthio ;
ou bien un groupe cycloalkyle ou cycloalcényle, chacun d'eux pouvant porter un, deux ou trois des substituants suivants : halogéno, alkyle, halogénoalkyle et alcoxy ;
ou bien un groupe aryle qui peut être halogéné en totalité ou en partie et/ou peut porter un, deux ou trois des substituants suivants : nitro, cyano, alkyle, halogénoalkyle, alcoxy, halogénoalcoxy et alkylthio ;
R⁶ représente un groupe alkyle ou alcényle, chacun d'eux pouvant être halogéné en totalité ou en partie et/ou pouvant porter un des substituants suivants : alkylthio, cycloalkyle, cycloalcényle ou aryle, les groupes aromatiques pouvant eux-mêmes porter un, deux ou trois des substituants suivants : nitro, cyano, halogéno, alkyle, halogénoalkyle, alcoxy, halogénoalcoxy et alkylthio ;
un groupe cycloalkyle ou cycloalcényle, chacun d'eux pouvant porter un, deux ou trois des substituants suivants : halogéno, alkyle, halogénoalkyle et alcoxy ;
un groupe aryle qui peut être halogéné en totalité ou en partie et/ou peut porter un, deux ou trois des substituants suivants : nitro, cyano, alkyle, halogénoalkyle, alcoxy, halogénoalcoxy et alkylthio ; et
R⁷ représente l'hydrogène ou un groupe alkyle,
et
b) au moins un amide de formule II
A - CO - NR⁸ - R⁹ (II)
dans laquelle
A représente un groupe pyridyle, thiazolyle, pyrazolyle ou oxazolyle, chacun d'eux pouvant porter un, deux ou trois substituants choisis, indépendamment les un des autres, parmi les groupes alkyle, les halogènes, les groupes difluorométhyle et trifluorométhyle ;
R⁸ représente un atome d'hydrogène, un groupe alkyle ou alcoxy ;
R⁹ représente un phényle qui comporte un groupe phényle en position 2, substitué par un à cinq atomes d'halogènes et/ou par un à trois groupes choisis, indépendamment les uns des autres, parmi les groupes alkyle en C1-C4, halogénoalkyle en C1-C4, alcoxy en C1-C4, halogénoalcoxy en C1-C4, alkylthio en C1-C4 et halogénoalkylthio en C1-C4.

2. Produit selon la revendication 1, pour lequel, dans les composés de formule I, Z représente l'hydrogène.

3. Produit selon la revendication 2, pour lequel, dans les composés de formule I
R¹ représente un groupe alkyle qui peut être halogéné en totalité ou en partie et/ou peut porter un ou deux des substituants suivants : alcoxy, halogénoalcoxy, cycloalkyle, cycloalcényle, les groupes cycliques pouvant porter eux-mêmes un, deux ou trois atomes d'halogènes et/ou groupes alkyle, et aryle, qui peut être halogéné en totalité ou en partie et/ou peut porter un, deux ou trois des substituants suivants : alkyle et halogénoalkyle ;
un groupe cycloalkyle ou cycloalcényle, chacun d'eux pouvant être halogéné en totalité ou en partie et/ou pouvant porter un, deux, trois, quatre ou cinq des substituants suivants : alkyle, halogénoalkyle et aryle, lequel peut être halogéné en totalité ou en partie et/ou peut porter un, deux ou trois des substituants suivants : alkyle et halogénoalkyle ;
un groupe bicycloalkyle en C6-C15 ou bicycloalcényle en C7-C15, chacun d'eux pouvant être halogéné en totalité ou en partie et/ou pouvant porter un, deux, trois, quatre ou cinq substituants alkyle ou halogénoalkyle ;
R² et R³ représentent chacun, indépendamment l'un de l'autre, un halogène, un groupe alkyle ou halogénoalkyle.

4. Produit selon la revendication 3, pour lequel, dans les composés de formule I
R¹ représente un groupe alkyle qui peut être halogéné en totalité ou en partie et/ou peut porter un substituant aryle, lequel peut lui-même être halogéné en totalité ou en partie et/ou peut porter un substituant alkyle ;
un groupe cycloalkyle ou cycloalcényle, chacun d'eux pouvant être halogéné en totalité ou en partie et pouvant porter un, deux, trois, quatre ou cinq substituants alkyle ;
un groupe bicycloalkyle ou bicycloalcényle, chacun d'eux pouvant être halogéné en totalité ou en partie et/ou pouvant porter un, deux, trois, quatre ou cinq substituants alkyle ; et
R² et R³ représentent chacun, indépendamment l'un de l'autre, un halogène, plus spécialement le fluor ou le chlore, ou un groupe alkyle.

5. Produit selon la revendication 1, pour lequel le composé de formule I est un composé du tableau ci-après :

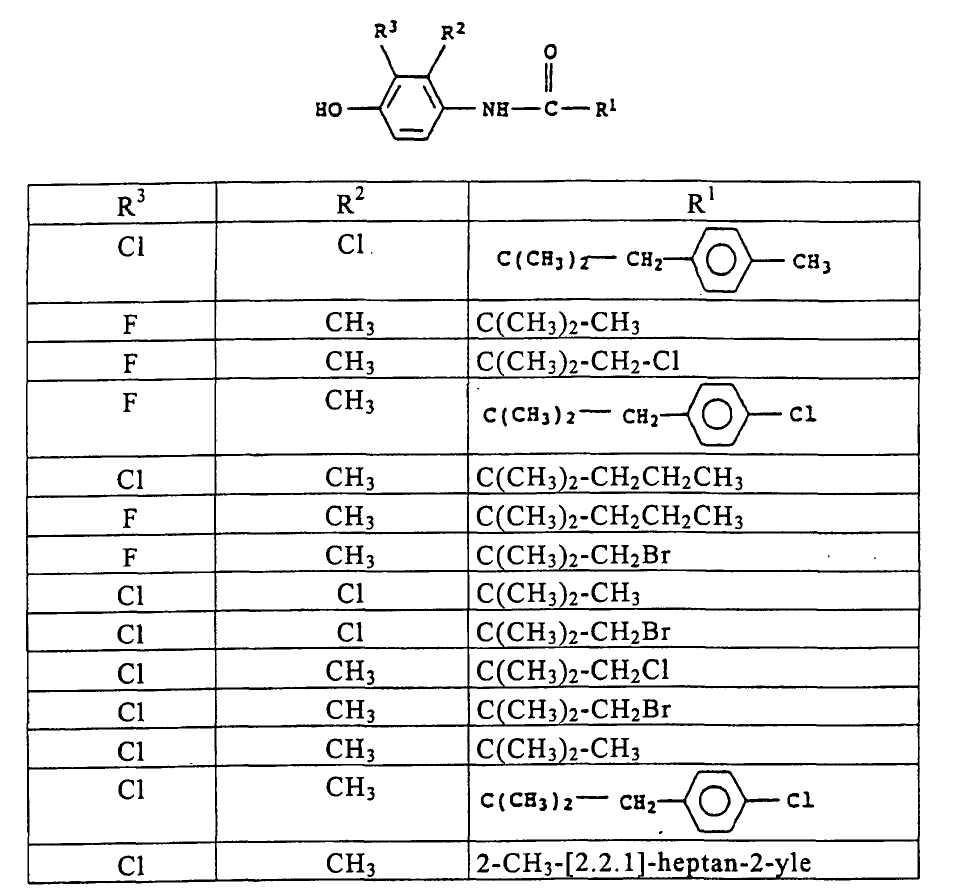

6. Produit selon la revendication 1, pour lequel le composé de formule I est un composé du tableau ci-après :

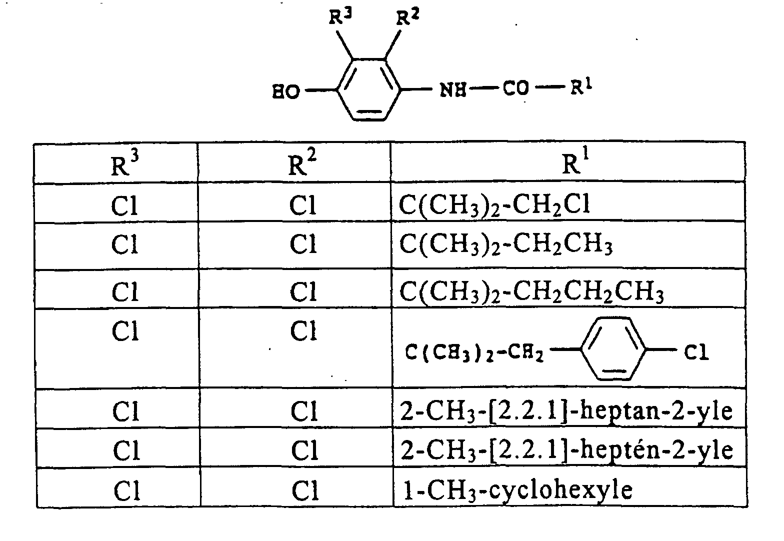

7. Produit selon l'une des revendications 1 à 6, qui contient, en tant qu'amide, un composé de formule II dans laquelle A représente un des groupes suivants :
pyridin-3-yle éventuellement substitué en position 2 par un halogène, un groupe méthyle, difluorométhyle ou trifluorométhyle ;
thiazol-5-yle éventuellement substitué dans les positions 2 et/ou 4 par des groupes méthyle, le chlore, des groupes difluorométhyle ou trifluorométhyle ;
thiazol-4-yle éventuellement substitué dans les positions 2 et/ou 5 par des groupes méthyle, le chlore, des groupes difluorométhyle ou trifluorométhyle ;
1-méthylpyrazol-4-yle éventuellement substitué dans les positions 3 et/ou 5 par des groupes méthyle, le chlore, des groupes difluorométhyle ou trifluorométhyle ; ou bien
oxazol-5-yle éventuellement substitué dans les positions 2 et/ou 4 par des groupes méthyle ou le chlore.

8. Produit selon l'une des revendications qui précèdent, contenant en tant qu'amide un composé de formule IIa 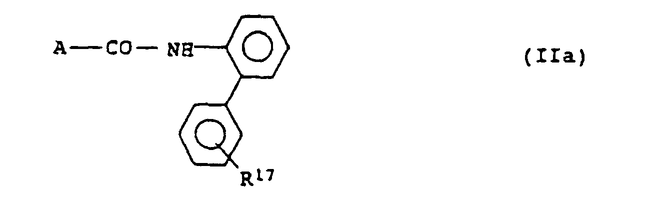 dans laquelle
A représente 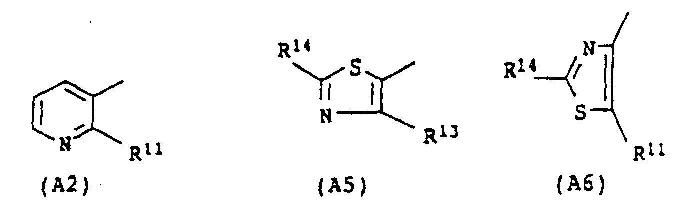 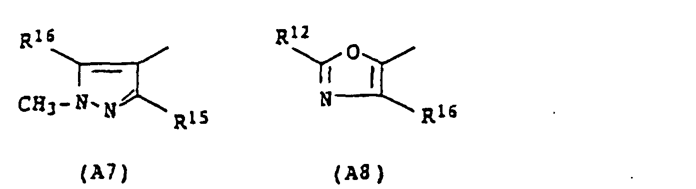
R¹¹ représente un groupe trifluorométhyle ou le chlore,
R¹² représente l'hydrogène ou un groupe méthyle,
R¹³ représente un groupe méthyle, difluorométhyle, trifluorométhyle ou le chlore ;
R¹⁴ représente l'hydrogène, un groupe méthyle ou le chlore,
R¹⁵ représente un groupe méthyle, difluorométhyle ou trifluorométhyle,
R¹⁶ représente l'hydrogène, un groupe méthyle, difluorométhyle, trifluorométhyle ou le chlore,
R¹⁷ représente un groupe alkyle en C1-C4, alcoxy en C1-C4, alkylthio en C1-C4 ou un halogène.

9. Produit selon l'une des revendications 1 à 6 contenant en tant qu'amide un composé de formule IIb 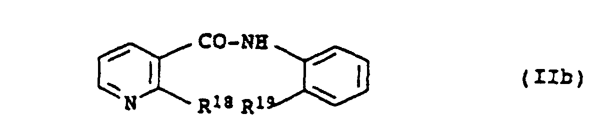 dans laquelle
R¹⁸ représente un halogène et
R¹⁹ représente un groupe phényle substitué par un halogène.

10. Produit selon la revendication 9 qui contient en tant qu'amide un composé répondant à l'une des formules suivantes :

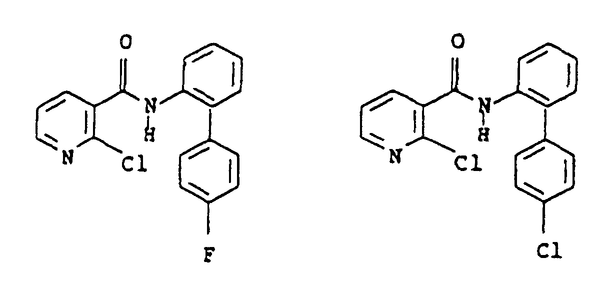

11. Produit selon l'une des revendications qui précèdent, conditionné en deux parties, l'une des parties contenant la substance active I dans un véhicule solide ou liquide et l'autre partie l'amide de formule II dans un véhicule solide ou liquide.

12. Procédé pour combattre les mycètes nuisibles, **caractérisé par** le fait que l'on traite les mycètes, leur habitat ou les matériaux, végétaux, semences, sols, aires ou locaux qu'on veut protéger contre une attaque par les mycètes par un produit selon l'une des revendications 1 à 11, les substances actives pouvant être appliquées en même temps, ensemble ou séparément, ou successivement.
